# EUROPÄISCHE PATENTSCHRIFT

(11) **EP 3 676 505 B1**
(45) Veröffentlichungstag und Bekanntmachung des Hinweises auf die Patenterteilung: **25.11.2020**
(21) Anmeldenummer: 18749285.5
(22) Anmeldetag: 18.07.2018
(51) Int. Cl.: F16C 29/04, A47B 88/493, A47B 88/487

(54) **SCHUBLADENAUSZIEHFÜHRUNG**
DRAWER PULL-OUT GUIDE
GLISSIÈRE DE SORTIE DE TIROIR

(30) Priorität: 30.08.2017 AT 507252017
(43) Veröffentlichungstag der Anmeldung: 08.07.2020
(73) Patentinhaber: Julius Blum GmbH, 6973 Höchst (AT)
(72) Erfinder: MEUSBURGER, Marc, 6863 Egg (AT)
(74) Vertreter: Torggler & Hofinger Patentanwälte
(86) Internationale Anmeldenummer: PCT/AT2018/060153
(87) Internationale Veröffentlichungsnummer: WO 2019/040955

(56) Entgegenhaltungen:
- EP-A1- 0 363 583
- WO-A1-2013/010139
- DE-U1-202007 011 533
- DE-U1-202007 011 533
- GB-A- 2 168 597
- US-A1- 2003 197 452
- US-A1- 2004 227 444

## Beschreibung

Die vorliegende Erfindung bezieht sich auf eine Schubladenausziehführung, umfassend:
- eine erste Führungsschiene und wenigstens eine zweite Führungsschiene, welche relativ zueinander verschiebbar gelagert sind,
- wenigstens einen Laufwagen mit lastübertragenden Wälzkörpern, wobei der wenigstens eine Laufwagen zwischen der ersten Führungsschiene und der wenigstens einen zweiten Führungsschiene verschiebbar gelagert ist, wobei der wenigstens eine Laufwagen zumindest zwei um eine Drehachse drehbar gelagerte Wälzkörper aufweist, welche in einer Draufsicht auf eine Ebene normal zu einer Längsrichtung der Führungsschienen seitlich versetzt zueinander angeordnet sind, wobei die zumindest zwei Wälzkörper des wenigstens einen Laufwagens jeweils eine zylindrische Form aufweisen und in einer Montagelage der Schubladenausziehführung jeweils um eine horizontal verlaufende Drehachse drehbar gelagert sind.

Bei Schubladenausziehführungen werden zur Lastübertragung der Schublade Laufwagen eingesetzt, welche eine reibungsarme und eine präzise Translation der Führungsschienen zueinander ermöglichen. Diese Laufwagen (oder Laufwagenkäfige) weisen Wälzkörper (beispielsweise in Form von Zylindern, Kugeln oder Kegeln) auf, welche an vorgesehenen Laufstegen der Führungsschienen verfahrbar sind, sodass die Führungsschienen relativ zueinander abstützbar sind.

In der WO 2007/108601 A1 und in der DE 20 2014 009 194 U1 sind nichtgattungsgemäße Schubladenausziehführungen offenbart, wobei die lastübertragenden Wälzkörper als Kugeln ausgebildet sind, welche in einem gemeinsamen Laufwagen gelagert sind. Diese Kugelführungen weisen die Nachteile auf, dass die Nutzungsbreite der Kugeln aufgrund ihrer sphärischen Oberfläche nur zu etwa 70% genützt wird, d.h. etwa 30% der Kugelbreite verschwenden Bauraum und erhöhen das Gewicht. Außerdem ist die Kontaktfläche zu den Schienenprofilen lediglich "punktförmig" ausgebildet, wobei dieser Punktkontakt neben einer geringen Abstützfläche auch zu einer hohen Flächenpressung und damit zu unerwünschten Deformationen der Kugeln führt.

In der GB 2 453 326 A ist eine Ausziehführung für Schubladen offenbart, wobei in einem zwischen der Mittelschiene und der Ausziehschiene angeordneten Laufwagen zwei seitlich zueinander beabstandete Wälzkörper in Form von zylindrischen Rollen angeordnet sind. Die zylindrischen Rollen weisen eine in Montagelage vertikal verlaufende Drehachse auf und sind somit nicht als lastübertragende Wälzkörper ausgebildet.

In der DE 30 26 544 A1 ist eine Schubladenausziehführung mit einer Korpusschiene, einer Mittelschiene und mit einer Ladenschiene gezeigt, wobei zwischen diesen Schienen jeweils verschiebbar angeordnete Laufwagen mit lastübertragenden Wälzkörpern angeordnet sind. Die Bewegungen der beiden Laufwagen sind durch ein Zahnrad miteinander synchronisiert, wobei gemäß Fig. 8 die Wälzkörper der Laufwagen in einer Draufsicht auf eine Ebene normal zu einer Längsrichtung der Schubladenausziehführung seitlich versetzt zueinander angeordnet sind.

Auch die WO 2013/010139 A1 offenbart eine Schubladenausziehführung nach dem Oberbegriff des unabhängigen Anspruchs.

Aufgabe der vorliegenden Erfindung ist es, eine Schubladenausziehführung der eingangs erwähnten Gattung mit einer stabilen und kompakten Ausführung des Laufwagens anzugeben.

Dies wird erfindungsgemäß durch die Merkmale des Patentanspruchs 1 gelöst. Weitere Ausführungsbeispiele der Erfindung sind in den abhängigen Ansprüchen angegeben.

Gemäß der Erfindung ist also vorgesehen, dass die Drehachsen der zumindest zwei Wälzkörper in einer selben Laufebene angeordnet sind und dass die zumindest zwei Wälzkörper jeweils einen gleichen Durchmesser aufweisen.

Dies stellt angesichts der eingangs erwähnten WO 2007/108601 A1 und DE 20 2014 009 194 U1 auch keine naheliegende Maßnahme dar, weil die dort gezeigten Schubladenausziehführungen samt Laufwagen für den Einsatz mit zylindrischen Rollen mit horizontal verlaufenden Drehachsen erheblich modifiziert werden müssten.

Auf diese Weise werden seitliche Kippmomente, die aufgrund einer Belastung der Schublade auf die Führungsschienen ausgeübt werden, über die zueinander seitlich versetzten Wälzkörper verbessert übertragen und können damit optimal aufgefangen werden.

Ein weiterer Vorteil besteht darin, dass anstelle von breiten Wälzkörpern des Laufwagens zumindest zwei seitlich zueinander beabstandete Wälzkörper verwendet werden können. Dadurch kann die Herstellung des Laufwagens vereinfacht werden, weil der Laufwagen mit standardmäßigen Wälzkörpern, welche nur eine einzige vorgegebene Breite und/oder nur einen einzigen vorgegebenen Durchmesser aufweisen, ausgerüstet werden kann. Auf diese Weise kann, falls zweckmäßig, auf eine Bestückung des Laufwagens mit unterschiedlich breiten und/oder unterschiedlich großen Wälzkörpern verzichtet werden.

Neben einer stabilen und kompakten Bauweise kann dabei die Gefahr von Abplattungen der Wälzkörper reduziert werden, weil die auftretenden Kräfte durch die Anordnung von zumindest zwei seitlich zueinander versetzten Wälzkörpern in einer gemeinsamen Laufebene auf einen größeren Bereich verteilt werden und damit jeder einzelne Wälzkörper lediglich reduzierten Belastungen ausgesetzt ist.

Gemäß einem Ausführungsbeispiel kann vorgesehen sein, dass die zumindest zwei Wälzkörper des Laufwagens in einer entlang einer Längsrichtung der Führungsschienen verlaufenden Richtung voneinander beabstandet sind.

Gemäß der Erfindung ist vorgesehen, dass
- die zumindest zwei Wälzkörper jeweils um eine in Montagelage horizontal verlaufende Drehachse drehbar gelagert sind, und
- dass die zumindest zwei Wälzkörper jeweils eine zylindrische Form aufweisen.

Gemäß der Erfindung ist vorgesehen dass der Laufwagen zumindest vier oder mehrere Wälzkörper aufweist, welche jeweils um eine Drehachse drehbar gelagert sind, wobei zumindest zwei Drehachsen der zumindest vier oder mehreren Wälzkörper in einer ersten Laufebene und die anderen Drehachsen der vier oder mehreren Wälzkörper in von der ersten Laufebene gesonderten Laufebenen angeordnet sind.

Weitere Einzelheiten und Vorteile der vorliegenden Erfindung werden anhand der nachfolgenden Figurenbeschreibung erläutert. Dabei zeigt bzw. zeigen:
- Fig. 1: eine perspektivische Darstellung eines Möbels mit Schubladen, welche durch Schubladenausziehführungen relativ zu einem Möbelkorpus verfahrbar gelagert sind,
- Fig. 2: eine Schubladenausziehführung, welche mit einer Schubladenseitenwand zu verbinden ist,
- Fig. 3: die am Möbelkorpus zu befestigende erste Führungsschiene mit zwei voneinander gesonderten Laufwagen in einer perspektivischen Ansicht,
- Fig. 4a, 4b: ein Laufwagen mit einer Verzahnung und ein Käfig des Laufwagens in perspektivischen Darstellungen,
- Fig. 5: ein mögliches Ausführungsbeispiel einer Anordnung der Wälzkörper des Laufwagens in einem Querschnitt.

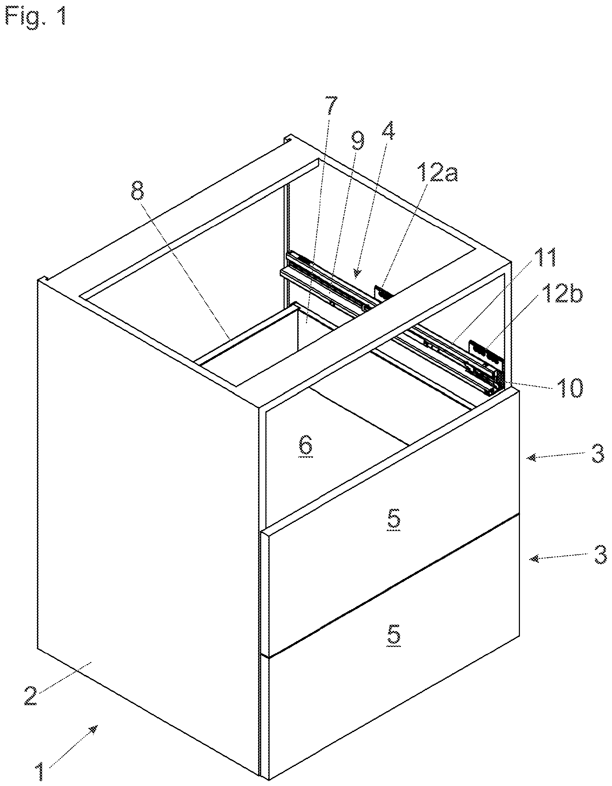

Fig. 1 zeigt ein Möbel 1 mit einem schrankförmigen Möbelkorpus 2, wobei Schubladen 3 über Schubladenausziehführungen 4 relativ zum Möbelkorpus 2 verfahrbar gelagert sind. Die Schubladen 3 weisen eine Frontblende 5, einen Schubladenboden 6, Schubladenseitenwände 7 und eine Rückwand 8 auf. Die Schubladenausziehführungen 4 umfassen jeweils eine erste Führungsschiene 9, welche über Befestigungsabschnitte 12a, 12b am Möbelkorpus 2 zu befestigen ist und zumindest eine zweite Führungsschiene 10, welche relativ zur ersten Führungsschiene 9 verfahrbar gelagert ist. Im gezeigten Ausführungsbeispiel ist noch eine dritte, an der Schublade 3 zu befestigende Führungsschiene 11 vorhanden, wobei die zweite Führungsschiene 10 in der Funktion einer auszugsverlängernden Mittelschiene zwischen der ortsfesten ersten Führungsschiene 9 und der dritten Führungsschiene 11 verschiebbar ist.

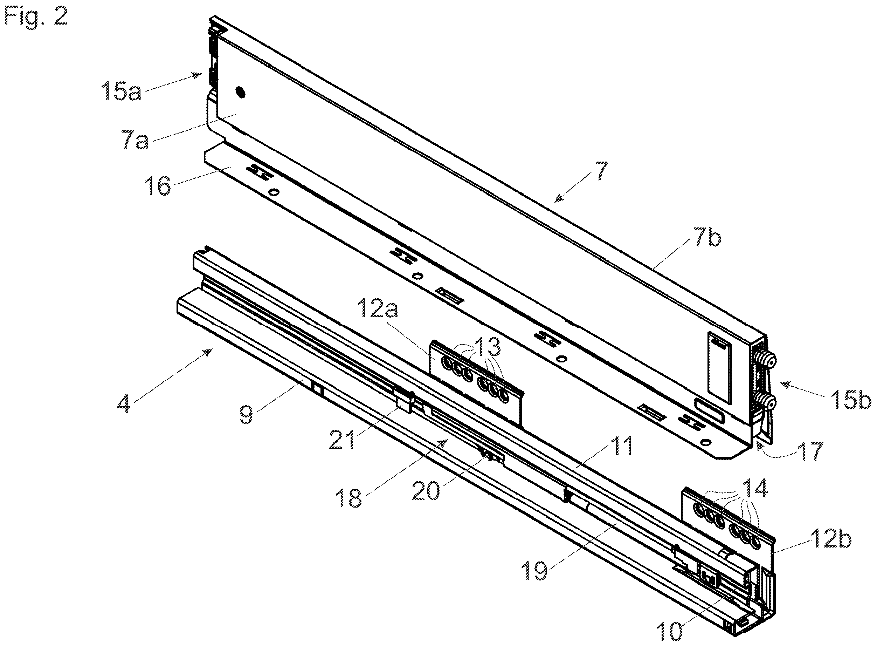

Fig. 2 zeigt eine Anordnung mit einer Schubladenausziehführung 4 und mit einer Schubladenseitenwand 7 in einer perspektivischen Ansicht. Die Befestigungsabschnitte 12a, 12b der ersten Führungsschiene 9 weisen jeweils eine oder mehrere Befestigungsstellen 13, 14 zur Befestigung am Möbelkorpus 2 auf. Die dritte Führungsschiene 11 ist mit der Schubladenseitenwand 7 verbunden oder lösbar verbindbar, wobei die zweite Führungsschiene 10 zwischen der ersten Führungsschiene 9 und der dritten Führungsschiene 11 verfahrbar ist. An der ersten Führungsschiene 9 ist ein Koppelelement 21 angeordnet, welches mit einem Mitnehmer 20 einer an der dritten Führungsschiene 11 gelagerten Einzugsvorrichtung 18 lösbar koppelbar ist, sodass die dritte Führungsschiene 11 gegen Ende der Schließbewegung vom Mitnehmer 20 erfasst und durch einen Kraftspeicher der Einzugsvorrichtung 18 in eine geschlossene Endlage einziehbar ist. Durch eine Dämpfvorrichtung 19, vorzugsweise mit einer hydraulischen Kolben-Zylinder-Einheit, ist diese federunterstützte Einzugsbewegung der dritten Führungsschiene 11 bis hin zur geschlossenen Endlage dämpfbar.

Die Schubladenseitenwand 7 ist als Hohlkammerprofil mit einer inneren Profilwand 7a und einer davon beabstandeten äußeren Profilwand 7b ausgebildet, wobei die Schubladenseitenwand 7 einen nach unten hin offenen und sich in Längsrichtung der Schubladenseitenwand 7 erstreckenden Kanal 17 ausbildet, in welchem die dritte Führungsschiene 11 anordenbar ist. Die Schubladenseitenwand 7 weist ferner eine erste Befestigungsvorrichtung 15a zum Verbinden mit der Rückwand 8, eine zweite Befestigungsvorrichtung 15b zum Verbinden mit der Frontblende 5 sowie eine Auflage 16 zur Abstützung des Schubladenbodens 6 auf.

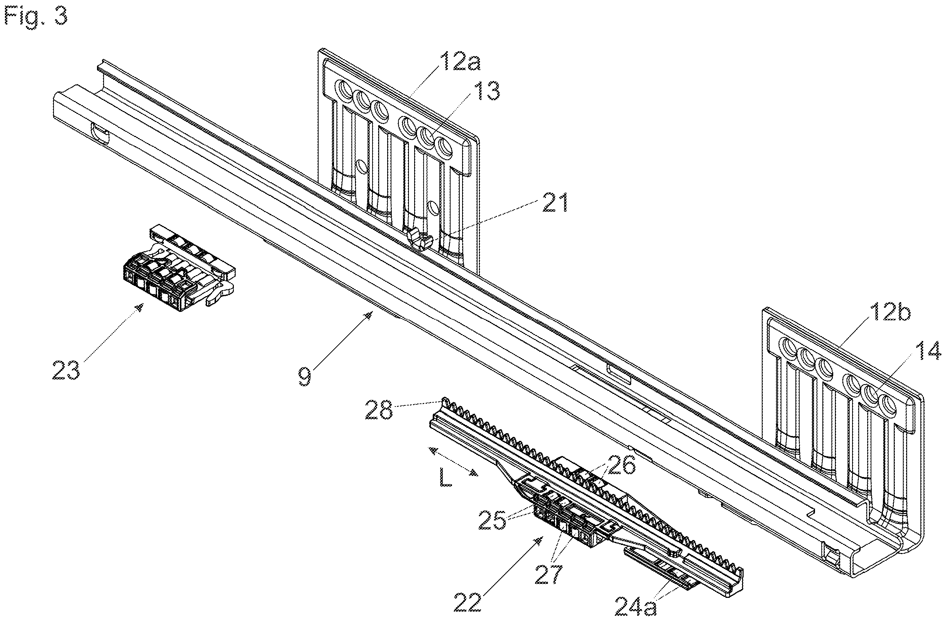

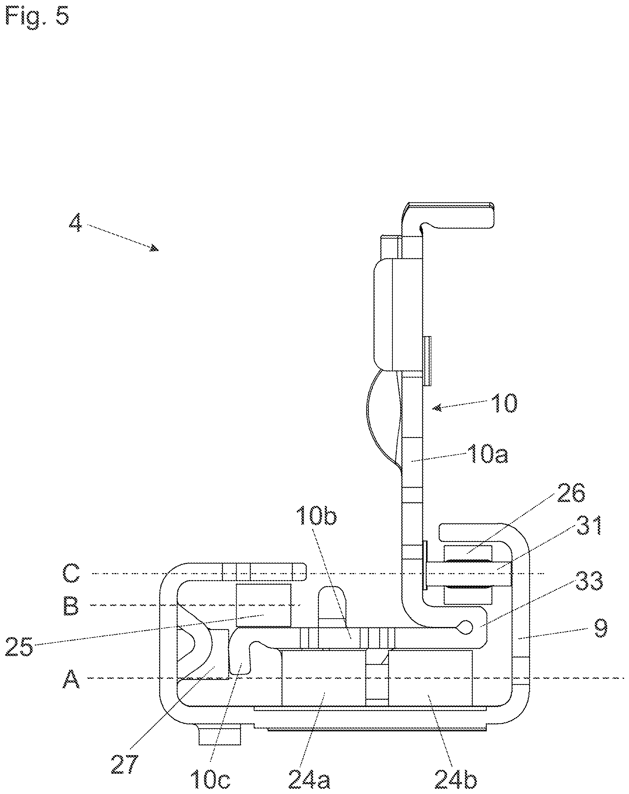

Fig. 3 zeigt die erste Führungsschiene 9 mit den am Möbelkorpus 2 zu montierenden Befestigungsabschnitten 12a, 12b. Die erste Führungsschiene 9 weist im Querschnitt einen U-förmigen oder C-förmigen Abschnitt auf, in welchem ein Laufwagen 22 und ein davon gesonderter weiterer Laufwagen 23 zur Führung und Abstützung der zweiten Führungsschiene 10 verschiebbar gelagert sind. Der Laufwagen 22 und der weitere Laufwagen 23 sind in einer gemeinsamen Laufebene verschiebbar gelagert. Der Laufwagen 22 weist lastübertragende Wälzkörper 24a, 24b, 25, 26 auf, deren Drehachsen in Höhenrichtung voneinander beabstandet sind und damit in voneinander gesonderten Laufebenen A, B, C (Fig. 5a, Fig. 5b) angeordnet sind. Der Laufwagen 22 weist ferner auch seitliche Stützrollen 27 mit in Montagelage vertikal verlaufenden Drehachsen auf, wobei die seitlichen Stützrollen 27 einerseits entlang einem in Längsrichtung (L) verlaufenden Vertikalsteg der ersten Führungsschiene 9 und andererseits an einem vertikal verlaufenden Steg 10c (Fig. 5a, Fig. 5b) der zweiten Führungsschiene 10 verfahrbar sind. Durch eine am Laufwagen 22 angeordnete oder ausgebildete Verzahnung 28 kann eine Bewegung des Laufwagens 22 über ein Zahnrad mit einer Bewegung eines weiteren Laufwagens synchronisiert werden, welcher zwischen der zweiten Führungsschiene 10 und der dritten Führungsschiene 11 verschiebbar gelagert ist.

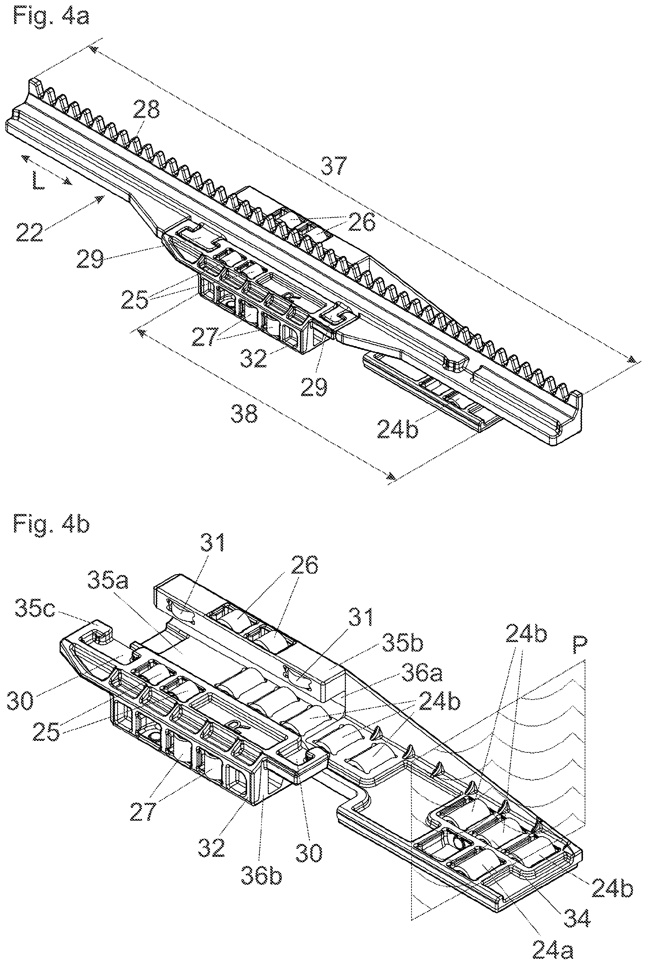

Fig. 4a zeigt den Laufwagen 22 in einer perspektivischen Ansicht. Der Laufwagen 22 umfasst einen Käfig 32, in welchem die lastübertragenden Wälzkörper 24a, 24b, 25, 26 und die seitlichen Stützrollen 27, 31 relativ zum Käfig 32 in einer in Längsrichtung (L) des Laufwagens 22 verlaufenden Richtung ortsfest gelagert sind. Die Verzahnung 28 kann zusammen mit dem Käfig 32 einstückig ausgebildet sein, oder - wie in der Figur gezeigt - am Käfig 32 lösbar befestigt sein. Hierfür weist die Verzahnung 28 in Längsrichtung (L) voneinander beabstandete, vorzugsweise T-förmige und/oder L-förmige, Laschen 29 auf, welche in Montagelage der Verzahnung 28 am Käfig 32 in korrespondierenden Ausnehmungen 30 (Fig. 4b) des Käfigs 32 formschlüssig eingreifen. Die in verschiedenen Laufebenen A, B, C angeordneten Wälzkörper 24a, 24b, 25, 26 sind jeweils um eine horizontal verlaufende Achse drehbar gelagert.

Fig. 4b zeigt den Käfig 32 des Laufwagens 22, wobei die Ausnehmungen 30 zur lösbaren Aufnahme der an der Verzahnung 28 angeordneten Laschen 29 gut erkennbar sind. Die ersten und zweiten Wälzkörper 24a, 24b sind in einer ersten Laufebene (A), die dritten Wälzkörper 25 in einer zweiten Laufebene (B) und die vierten Wälzkörper 26 in einer dritten Laufebene (C) angeordnet, wobei die erste, zweite und dritte Laufebene (A, B, C) in Montagelage der Schubladenausziehführung 4 am Möbelkorpus 2 in Höhenrichtung voneinander beabstandet sind. Die Wälzkörper 24a, 24b, 25 und 26 können in einer entlang einer Längsrichtung (L) verlaufenden Richtung voneinander beabstandet sein. Zumindest die Wälzkörper 24a, 24b, vorzugsweise alle Wälzkörper 24a, 24b, 25, 26, weisen eine zylindrische Form auf. Darüber hinaus ist es möglich, dass die ersten, zweiten und dritten Wälzkörper 24a, 24b, 25 und 26 jeweils einen unterschiedlichen Durchmesser aufweisen. Die Durchmesser der Wälzkörper 24a, 24b können jeweils zwischen 3,8 mm und 4,2 mm, die Durchmesser der Wälzkörper 25 zwischen 2,8 mm und 3,3 mm und die Durchmesser der Wälzkörper 26 zwischen 4,0 mm und 4,5 mm dimensioniert werden. Auch kann vorgesehen sein, dass jene Wälzkörper 24a, 24b der Wälzkörper 24a, 24b, 25 und 26, welche an einem vorderen Ende des Laufwagens 22 gelagert sind, einen geringeren Durchmesser als die anderen Wälzkörper 25, 26 aufweisen. Die zumindest zwei Wälzkörper 24a, 24b des Laufwagens 22 sind, vorzugsweise ausschließlich, durch einen Teil des Käfigs 32, vorzugsweise durch zumindest einen Steg 34 der Käfigs 32, in seitlicher Richtung voneinander beabstandet, wobei sich der Steg 34 zumindest abschnittsweise in Längsrichtung (L) erstreckt. Exemplarisch eingezeichnet ist eine normal zu einer Längsrichtung (L) der Führungsschienen 9, 10 verlaufende Ebene (P), wobei die Wälzkörper 24a, 24b in einer Draufsicht auf diese Ebene (P) seitlich versetzt zueinander angeordnet sind.

Gemäß einem Ausführungsbeispiel kann vorgesehen sein, dass der wenigstens eine Laufwagen 22 drei in der Montagelage im Wesentlichen horizontal ausgerichtete Stege 35a, 35b, 35c aufweist, an welchen jeweils ein Wälzkörper 24b, 25, 26 gelagert ist, wobei vorzugsweise vorgesehen ist, dass die Wälzkörper 24b, 25, 26 durch die Stege 35a, 35b, 35c hindurchgeführt sind. In der gezeigten Figur sind die Stege 35a, 35b, 35c über zwei in der Montagelage im Wesentlichen vertikal ausgerichtete Verbindungsstege 36a, 36b miteinander verbunden, wobei vorzugsweise vorgesehen ist, dass zumindest einer der Verbindungsstege 36a, 36b wenigstens eine seitliche Stützrolle 31 aufweist, welche besonders bevorzugt durch diesen Verbindungssteg 36a, 36b hindurchgeführt ist.

Einer der in Montagelage im Wesentlichen horizontal ausgerichteten Stege 35a, 35b, 34c kann sich im Wesentlichen über die gesamte Breite zumindest einer der Führungsschienen 9, 10 erstrecken, wobei vorzugsweise vorgesehen ist, dass dieser Steg 35a eine tiefste Lage relativ zu den beiden anderen Stegen 35b, 35c einnimmt. Einer der in Montagelage im Wesentlichen horizontal ausgerichteten Stege 35a, 35b, 35c kann im Wesentlichen doppelt so breit als zumindest einer der beiden anderen Stege 35b, 35c ausgebildet sein.

Der wenigstens eine Laufwagen 22 kann in einem Querschnitt im Wesentlichen U-förmig oder im Wesentlichen C-förmig ausgebildet sein.

Wie aus Fig. 4a hervorgeht, kann der wenigstens eine Laufwagen 22 eine Länge 37 aufweisen, wobei sich der Bereich 38, in welchem die Wälzkörper 24a, 24b, 25, 26 des Laufwagens 22 angeordnet sind, nur über einen Teil der Länge 37 des wenigstens einen Laufwagens 22 erstreckt.

Fig. 5a zeigt die erste Führungsschiene 9 und die relativ dazu verschiebbare zweite Führungsschiene 10 in einem Querschnitt, wobei der Käfig 32 des Laufwagens 22 aus Gründen der verbesserten Übersicht ausgeblendet ist. Die zweite Führungsschiene 10 weist einen, vorzugsweise vertikalen, Seitensteg 10a und einen mit dem Seitensteg 10a über einen Falz 33 verbundenen, vorzugsweise horizontalen, Quersteg 10b auf. Die zumindest zwei Wälzkörper 24a, 24b sind in Längsrichtung (L) entlang einem Laufsteg der ersten Führungsschiene 9 verfahrbar, während die dritten Wälzkörper 25 entlang des Quersteges 10b und die vierten Wälzkörper 26 entlang des Falzes 33 der zweiten Führungsschiene 10 abrollbar sind. Erfindungsgemäß sind die zumindest zwei Wälzkörper 24a, 24b, zumindest ein dritter Wälzkörper 25 und zumindest ein vierter Wälzkörper 26 jeweils in voneinander gesonderten Laufebenen (A, B, C) verfahrbar gelagert. Zu erkennen ist eine seitliche Stützrolle 31 des Laufwagens 22, welche eine vertikal verlaufende Drehachse aufweist und welche zwischen der ersten Führungsschiene 9 und dem vertikal verlaufenden Seitensteg 10a der zweiten Führungsschiene 10 abrollt. Die Wälzkörper 24a, 24b, 25 und 26 sind jeweils um eine in Montagelage horizontal verlaufende Drehachse drehbar gelagert, wobei die Drehachsen der Wälzkörper 24a, 24b, 25 und 26 jeweils in drei übereinanderliegenden Laufebenen (A, B, C) angeordnet sind. Eine verbesserte Abstützung zur Kompensation von seitlichen Kippmomenten ist dadurch gegeben, wenn die Wälzkörper 24a, 24b, 25, 26 - in einer Draufsicht auf eine normal zur Längsrichtung (L) der Führungsschienen 9, 10 verlaufende Ebene (P) - seitlich versetzt zueinander angeordnet sind. Überdies kann vorgesehen sein, dass die ersten und zweiten Wälzkörper 24a, 24b in einer Draufsicht auf eine Ebene (P) normal zur Längsrichtung (L) der Führungsschienen 9, 10 eine tiefste Lage relativ zu einem dritten Wälzkörper 25 und zu einem vierten Wälzkörper 26 einnehmen, wobei der dritte Wälzkörper 25 und der vierte Wälzkörper 26 vollständig oberhalb der ersten und zweiten Wälzkörper 24a, 24b angeordnet sind. In der Figur ist außerdem gezeigt, dass der dritte und vierte Wälzkörper 25, 26 in einer Draufsicht auf die Ebene (P) normal zur Längsrichtung (L) relativ zueinander nur teilweise übereinander angeordnet sind. Der Quersteg 10b der zweiten Führungsschiene 10 ist mit einem vertikal verlaufenden Steg 10c verbunden, wobei die seitlichen Stützrollen 27 mit vertikaler Drehachse zwischen der ersten Führungsschiene 9 und dem vertikal verlaufenden Steg 10c der zweiten Führungsschiene 10 abrollbar sind.

Bei allen Ausführungsbeispielen kann vorgesehen sein, dass die ersten und zweiten Wälzkörper 24a, 24b zu einer ersten Wälzkörpergruppe, der dritte Wälzkörper 25 zu einer zweiten Wälzkörpergruppe und der vierte Wälzkörper 26 zu einer dritten Wälzkörpergruppe gehört, wobei die erste, zweite und dritte Wälzkörpergruppe jeweils mehrere Wälzkörper 24a, 24b, 25, 26 aufweisen, welche in derselben Laufebene A, B, C angeordnet sind. Ferner kann vorgesehen sein, dass die Wälzkörper 24a, 24b, 25, 26, welche jeweils in derselben Laufebene (A, B, C) gelagert sind, in Längsrichtung (L) des Laufwagens 22 voneinander beabstandet und/oder relativ zueinander seitlich versetzt angeordnet sind.

## Patentansprüche

1. Schubladenausziehführung (4), umfassend,
- eine erste Führungsschiene (9) und wenigstens eine zweite Führungsschiene (10), welche relativ zueinander verschiebbar gelagert sind,
- wenigstens einen Laufwagen (22) mit lastübertragenden Wälzkörpern (24a, 24b, 25, 26), wobei der wenigstens eine Laufwagen (22) zwischen der ersten Führungsschiene (9) und der wenigstens einen zweiten Führungsschiene (10) verschiebbar gelagert ist, wobei der wenigstens eine Laufwagen (22) zumindest zwei um eine Drehachse drehbar gelagerte Wälzkörper (24a, 24b) aufweist, welche in einer Draufsicht auf eine Ebene (P) normal zu einer Längsrichtung (L) der Führungsschienen (9, 10) seitlich versetzt zueinander angeordnet sind, wobei die zumindest zwei Wälzkörper (24a, 24b) des wenigstens einen Laufwagens (22) jeweils eine zylindrische Form aufweisen und in einer Montagelage der Schubladenausziehführung (4) jeweils um eine horizontal verlaufende Drehachse drehbar gelagert sind,
- wobei die Drehachsen der zumindest zwei Wälzkörper (24a, 24b) in einer selben Laufebene (A) angeordnet sind und dass die zumindest zwei Wälzkörper (24a, 24b) jeweils einen gleichen Durchmesser aufweisen,
**dadurch gekennzeichnet, dass** der Laufwagen (22) zumindest vier Wälzkörper (24a, 24b 25, 26) aufweist, welche jeweils um eine Drehachse drehbar gelagert sind, wobei zumindest zwei Drehachsen der zumindest vier Wälzkörper (24a, 24b) in einer selben Laufebene (A) und eine dritte Drehachse und eine vierte Drehachse der zumindest vier Wälzkörper (24a, 24b, 25, 26) in von der Laufebene (A) gesonderten Laufebenen (B, C) angeordnet sind, wobei die in verschiedenen Laufebenen (A, B, C) angeordneten Wälzkörper (24a, 24b, 25, 26) jeweils um eine horizontal verlaufende Achse drehbar gelagert sind.

2. Schubladenausziehführung nach Anspruch 1, **dadurch gekennzeichnet, dass** der wenigstens eine Laufwagen (22) einen Käfig (32) zur Lagerung der zumindest zwei Wälzkörper (24a, 24b), welche in derselben Laufebene (A) angeordnet sind, aufweist, wobei die zumindest zwei Wälzkörper (24a, 24b) durch einen Teil des Käfigs (32), vorzugsweise durch zumindest einen Steg (34) der Käfigs (32), in seitlicher Richtung voneinander beabstandet sind.

3. Schubladenausziehführung nach Anspruch 1 oder 2, **dadurch gekennzeichnet, dass** die zumindest vier Wälzkörper (24a, 24b, 25, 26) des Laufwagens (22) in einer entlang einer Längsrichtung (L) der Führungsschienen (9, 10) verlaufenden Richtung voneinander beabstandet sind.

4. Schubladenausziehführung nach einem der Ansprüche 1 bis 3, **dadurch gekennzeichnet, dass** die zumindest vier Wälzkörper (24a, 24b, 25, 26) jeweils in Bezug auf den wenigstens einen Laufwagen (22) in einer Längsrichtung (L) des Laufwagens (22) ortsfest gelagert sind.

5. Schubladenausziehführung nach einem der Ansprüche 1 bis 4, **dadurch gekennzeichnet, dass** zumindest zwei der zumindest vier Wälzkörper (24a, 24b, 25, 26) - in einer Draufsicht auf die Ebene normal zur Längsrichtung (L) der Führungsschienen (9, 10) - eine tiefste Lage relativ zu einem dritten Wälzkörper (25) und zu einem vierten Wälzkörper (26) einnehmen, wobei der dritte Wälzkörper (25) und der vierte Wälzkörper (26) vollständig oberhalb der zumindest zwei Wälzkörper (24a, 24b) angeordnet sind.

6. Schubladenausziehführung nach einem der Ansprüche 1 bis 5, **dadurch gekennzeichnet, dass** zumindest zwei der zumindest vier Wälzkörper (24a, 24b, 25, 26) - in einer Draufsicht auf die Ebene normal zur Längsrichtung (L) der Führungsschienen (9, 10) - relativ zueinander nur teilweise übereinander angeordnet sind.

7. Schubladenausziehführung nach Anspruch 6, **dadurch gekennzeichnet, dass** zumindest zwei der zumindest vier Wälzkörper (24a, 24b, 25, 26) an einem vorderen Endbereich des Laufwagens (22) gelagert sind, wobei die zumindest zwei Wälzkörper (24a, 24b) einen geringeren Durchmesser als der dritte und der vierte Wälzkörper (25, 26) aufweisen.

8. Schubladenausziehführung nach einem der Ansprüche 1 bis 7, **dadurch gekennzeichnet, dass** zumindest zwei Wälzkörper (24, 24b) der zumindest vier Wälzkörper (24a, 24b, 25, 26) zu einer ersten Wälzkörpergruppe, ein dritter Wälzkörper (25) der zumindest vier Wälzkörper (24a, 24b, 25, 26) zu einer zweiten Wälzkörpergruppe und ein vierter Wälzkörper (26) der zumindest vier Wälzkörper (24a, 24b, 25, 26) zu einer dritten Wälzkörpergruppe gehört, wobei die erste, zweite und dritte Wälzkörpergruppe jeweils mehrere Wälzkörper (24a, 24b, 25, 26) aufweisen, welche in derselben Laufebene (A, B, C) angeordnet sind.

9. Schubladenausziehführung nach einem der Ansprüche 1 bis 8, **dadurch gekennzeichnet, dass** die Schubladenausziehführung (4) eine dritte, an einer Schublade (3) zu befestigende Führungsschiene (11) aufweist, wobei die erste Führungsschiene (9) an einem Möbelkorpus (2) zu befestigen ist und wobei die zweite Führungsschiene (10) zwischen der ersten Führungsschiene (9) und der dritten Führungsschiene (11) verschiebbar gelagert ist.

10. Schubladenausziehführung nach einem der Ansprüche 1 bis 9, **dadurch gekennzeichnet, dass** der wenigstens eine Laufwagen (22) drei in der Montagelage im Wesentlichen horizontal ausgerichtete Stege (35a, 35b, 35c) aufweist, an welchen jeweils ein der zumindest vier Wälzkörper (24b, 25, 26) gelagert ist, wobei vorzugsweise vorgesehen ist, dass die Wälzkörper (24b, 25, 26) durch die Stege (34a, 34b, 34c) hindurchgeführt sind, wobei vorzugsweise vorgesehen ist, dass die Stege (35a, 35b, 35c) über zwei in der Montagelage im Wesentlichen vertikal ausgerichtete Verbindungsstege (36a, 36b) miteinander verbunden sind, wobei vorzugsweise vorgesehen ist, dass zumindest einer der Verbindungsstege (36a, 36b) wenigstens eine seitliche Stützrolle (31) aufweist, welche besonders bevorzugt durch diesen Verbindungssteg (36a, 36b) hindurchgeführt ist.

11. Schubladenausziehführung nach Anspruch 10, **dadurch gekennzeichnet, dass** sich einer der in Montagelage im Wesentlichen horizontal ausgerichteten Stege (35a, 35b, 35c) im Wesentlichen über die gesamte Breite zumindest einer der Führungsschienen (9, 10) erstreckt, wobei vorzugsweise vorgesehen ist, dass dieser Steg (35a) eine tiefste Lage relativ zu den beiden anderen Stegen (35b, 35c) einnimmt.

12. Schubladenausziehführung nach Anspruch 10 oder 11, **dadurch gekennzeichnet, dass** einer der in Montagelage im Wesentlichen horizontal ausgerichteten Stege (35a, 35b, 35c) im Wesentlichen doppelt so breit als zumindest einer der beiden anderen Stege (35b, 35c) ist.

13. Schubladenausziehführung nach einem der Ansprüche 1 bis 12, **dadurch gekennzeichnet, dass** der wenigstens eine Laufwagen (22) in einem Querschnitt im Wesentlichen U-förmig oder im Wesentlichen C-förmig ausgebildet ist.

14. Schubladenausziehführung nach einem der Ansprüche 1 bis 13, **dadurch gekennzeichnet, dass** der wenigstens eine Laufwagen (22) eine Länge (37) aufweist und sich der Bereich (38), in welchem die Wälzkörper (24a, 24b, 25, 26) des Laufwagens (22) angeordnet sind, nur über einen Teil der Länge (37) des wenigstens einen Laufwagens (22) erstreckt.

15. Schublade (3) mit wenigstens einer Schubladenausziehführung (4) nach einem der Ansprüche 1 bis 14 zum Bewegen einer Schublade (3) relativ zu einem Möbelkorpus (2).

## Claims

1. A drawer pull-out guide (4), comprising:
- a first guide rail (9) and at least one second guide rail (10) displaceably supported relative to one another,
- at least one running carriage (22) having load-transmitting rolling bodies (24a, 24b, 25, 26), wherein the at least one running carriage (22) is displaceably supported between the first guide rail (9) and the at least one second guide rail (10), wherein the at least one running carriage (22) includes at least two rolling bodies (24a, 24b) rotatable about a rotational axis, the at least two rolling bodies (24a, 24b) - in a view onto a plane (P) perpendicular to a longitudinal direction (L) of the guide rails (9, 10) - being arranged so as to be laterally offset to one another, wherein each of the at least two rolling bodies (24a, 24b) has a cylindrical form and is rotationally supported about a horizontally extending rotational axis in a mounted position of the drawer pull-out guide (4),
- wherein the rotational axes of the at least two rolling bodies (24a, 24b) are arranged in a same running plane (A), and that the least two rolling bodies (24a, 24b) each have a same diameter,
**characterized in that** the running carriage (22) includes at least four rolling bodies (24a, 24b, 25, 26) which are each rotatably supported about a rotational axis, wherein at least two rotational axes of the at least four rolling bodies (24a, 24b, 25, 26) are arranged in a same running plane (A), and a third rotational axis and a fourth rotational axis of the at least four rolling bodies (24a, 24b, 25, 26) are arranged in running planes (B, C) separate from the running plane (A), wherein each of the rolling bodies (24a, 24b, 25, 26) arranged in different running planes (A, B, C) is rotatably supported about a horizontally extending rotational axis.

2. The drawer pull-out guide according to claim 1, **characterized in that** the at least one running carriage (22) includes a cage (32) for supporting the at least two rolling bodies (24a, 24b) which are arranged in the same running plane (A), wherein the at least two rolling bodies (24a, 24b) are spaced from one another in a lateral direction by a portion of the cage (32), preferably by at least one limb (34) of the cage (32).

3. The drawer pull-out guide according to claim 1 or 2, **characterized in that** the at least four rolling bodies (24a, 24b, 25, 26) of the running carriage (22) are spaced from one another in a direction extending along a longitudinal direction (L) of the guide rails (9, 10).

4. The drawer pull-out guide according to one of the claims 1 to 3, **characterized in that** each of the at least four rolling bodies (24a, 24b, 25, 26) - in relation to the at least one running carriage (22) - is stationarily supported in a longitudinal direction (L) of the running carriage (22).

5. The drawer pull-out guide according to one of the claims 1 to 4, **characterized in that** at least two of the at least four rolling bodies (24a, 24b, 25, 26) - in a view onto the plane (P) perpendicular to the longitudinal direction (L) of the guide rails (9, 10) - adopt a lowest position relative to a third rolling body (25) and to a fourth rolling body (26), wherein the third rolling body (25) and the fourth rolling body (26) are entirely arranged above the at least two rolling bodies (24a, 24b).

6. The drawer pull-out guide according to one of the claims 1 to 5, **characterized in that** at least two of the at least four rolling bodies (24a, 24b, 25, 26) - in a view onto the plane (P) perpendicular to the longitudinal direction (L) of the guide rails (9, 10) - are arranged only partially above one another.

7. The drawer pull-out guide according to claim 6, **characterized in that** at least two of the at least four rolling bodies (24a, 24b, 25, 26) are arranged on a front-end region of the running carriage (22), wherein the at least two rolling bodies (24a, 24b) have a diameter which is less than a diameter of the third and of the fourth rolling body (25, 26).

8. The drawer pull-out guide according to one of the claims 1 to 7, **characterized in that** at least two rolling bodies (24, 24b) of the at least four rolling bodies (24a, 24b, 25, 26) belong to a first group of rolling bodies, a third rolling body (25) of the at least four rolling bodies (24a, 24b, 25, 26) belongs to a second group of rolling bodies, and a fourth rolling body (26) of the at least four rolling bodies (24a, 24b, 25, 26) belongs to a third group of rolling bodies, and each of the first, second and third group of rolling bodies includes a plurality of rolling bodies (24a, 24b, 25, 26) which are arranged in a same running plane (A, B, C).

9. The drawer pull-out guide according to one of the claims 1 to 8, **characterized in that** the drawer pull-out guide (4) includes a third guide rail (11) to be fixed to a drawer (3), wherein the first guide rail (9) is to be fixed to a furniture carcass (2) and wherein the second guide rail (10) is displaceably supported between the first guide rail (9) and the third guide rail (11).

10. The drawer pull-out guide according to one of the claims 1 to 9, **characterized in that** the at least one running carriage (22) includes three limbs (35a, 35b, 35c) aligned substantially horizontally in the mounted position, and one of the at least four rolling bodies (24b, 25, 26) is supported on each of the three limbs (35a, 35b, 35c), wherein it is preferably provided that the rolling bodies (24b, 25, 26) are passed through the limbs (35a, 35b, 35c), wherein it is preferably provided that the limbs (35a, 35b, 35c) are connected to one another by two connecting limbs (36a, 36b) aligned substantially vertically in the mounted position, wherein it is preferably provided that at least one of the connecting limbs (36a, 36b) includes at least one lateral supporting roller (31), wherein it is particularly preferably provided that the at least one lateral supporting roller (31) is passed through that connecting limb (36a, 36b).

11. The drawer pull-out guide according to claim 10, **characterized in that** one of the limbs (35a, 35b, 35c) aligned substantially horizontally in the mounted position extends substantially over the entire width of at least one of the guide rails (9, 10), wherein it is preferably provided that said limb (35a) adopts a lowest position in relation to the two other limbs (35b, 35c).

12. The drawer pull-out guide according to claims 10 or 11, **characterized in that** one of the limbs (35a, 35b, 35c) aligned substantially horizontally in the mounted position has a width which is substantially twice as wide as one of the two other limbs (35b, 35c).

13. The drawer pull-out guide according to one of the claims 1 to 12, **characterized in that** the at least one running carriage (22), in a cross-section, has a substantially U-shaped or a substantially C-shaped configuration.

14. The drawer pull-out guide according to one of the claims 1 to 13, **characterized in that** the at least one running carriage (22) has a length (37), and the region (38) in which the rolling bodies (24a, 24b, 25, 26) of the running carriage (22) are arranged, only extends over a part of the length (37) of the at least one running carriage (22).

15. A drawer (3) comprising at least one drawer pull-out guide (4) according to one of the claims 1 to 14 for moving the drawer (3) relative to a furniture carcass (2).

## Revendications

1. Glissière d'extraction de tiroir (4), comprenant:
- un premier rail de guidage (9) et au moins un deuxième rail de guidage (10), lesquels sont logés de façon déplaçable l'un par rapport à l'autre,
- au moins un chariot (22) avec des corps de roulement transmetteurs de charge (24a, 24b, 25, 26), l'au moins un chariot (22) étant logé de façon déplaçable entre le premier rail de guidage (9) et le au moins un deuxième rail de guidage (10), dans laquelle l'au moins un chariot (22) présente au moins deux corps de roulement (24a, 24b) logés de façon rotative autour d'un axe de rotation, lesquels sont disposés en vue de dessus sur un plan (P) perpendiculaire à un sens longitudinal (L) des rails de guidage (9, 10) en étant décalés latéralement l'un par rapport à l'autre, les au moins deux corps de roulement (24a, 24b) de l'au moins un chariot (22) présentant chacun une forme cylindrique et, dans une position de montage de la glissière d'extraction de tiroir (4), étant logés chacun de façon rotative autour d'un axe de rotation passant horizontalement,
- dans laquelle les axes de rotation des au moins deux corps de roulement (24a, 24b) sont disposés dans un même plan de déplacement (A) et en ce que les au moins deux corps de roulement (24a, 24b) présentent chacun un diamètre identique,
**caractérisée en ce que** le chariot (22) présente au moins quatre corps de roulement (24a, 24b, 25, 26), lesquels sont logés chacun de façon rotative autour d'un axe de rotation, dans laquelle au moins deux axes de rotation des au moins quatre corps de roulement (24a, 24b) sont disposés dans un même plan de roulement (A) et un troisième axe de rotation et un quatrième axe de rotation des au moins quatre corps de roulement (24a, 24b, 25, 26) sont disposés dans des plans de déplacement (B, C) distincts du plan de déplacement (A), dans laquelle les corps de roulement (24a, 24b, 25, 26) disposés dans des plans de déplacement différents (A, B, C) sont logés chacun de façon rotative autour d'un axe passant horizontalement.

2. Glissière d'extraction de tiroir selon la revendication 1, **caractérisée en ce que** l'au moins un chariot (22) présente une cage (32) pour le logement des au moins deux corps de roulement (24a, 24b), lesquels sont disposés dans le même plan de déplacement (A), dans laquelle les au moins deux corps de roulement (24a, 24b) sont espacés l'un de l'autre dans le sens latéral par une partie de la cage (32), de préférence par au moins une barrette (34) de la cage (32).

3. Glissière d'extraction de tiroir selon la revendication 1 ou 2, **caractérisée en ce que** les au moins quatre corps de roulement (24a, 24b, 25, 26) du chariot (22) sont espacés les uns des autres dans une direction passant le long d'un sens longitudinal (L) des rails de guidage (9, 10).

4. Glissière d'extraction de tiroir selon l'une des revendications 1 à 3, **caractérisée en ce que** les au moins quatre corps de roulement (24a, 24b, 25, 26) sont logés chacun de façon stationnaire par rapport à l'au moins un chariot (22) dans un sens longitudinal (L) du chariot (22).

5. Glissière d'extraction de tiroir selon l'une des revendications 1 à 4, **caractérisée en ce qu'**au moins deux des au moins quatre corps de roulement (24a, 24b, 25, 26) - en vue de dessus sur le plan perpendiculaire au sens longitudinal (L) des rails de guidage (9, 10) - occupent une place plus basse par rapport à un troisième corps de roulement (25) et à un quatrième corps de roulement (26), dans laquelle le troisième corps de roulement (25) et le quatrième corps de roulement (26) sont disposés intégralement au-dessus des au moins deux corps de roulement (24a, 24b).

6. Glissière d'extraction de tiroir selon l'une des revendications 1 à 5, **caractérisée en ce qu'**au moins deux des au moins quatre corps de roulement (24a, 24b, 25, 26) - en vue de dessus sur le plan perpendiculaire au sens longitudinal (L) des rails de guidage (9, 10) - sont disposés l'un par rapport à l'autre seulement partiellement l'un au-dessus de l'autre.

7. Glissière d'extraction de tiroir selon la revendication 6, **caractérisée en ce qu'**au moins deux des au moins quatre corps de roulement (24a, 24b, 25, 26) sont logés sur une zone d'extrémité avant du chariot (22), dans laquelle les au moins deux corps de roulement (24a, 24b) présentent un diamètre inférieur au troisième et au quatrième corps de roulement (25, 26).

8. Glissière d'extraction de tiroir selon l'une des revendications 1 à 7, **caractérisée en ce qu'**au moins deux corps de roulement (24, 24b) des au moins quatre corps de roulement (24a, 24b, 25, 26) font partie d'un premier groupe de corps de roulement, un troisième corps de roulement (25) des au moins quatre corps de roulement (24a, 24b, 25, 26) fait partie d'un deuxième groupe de corps de roulement et un quatrième corps de roulement (26) des au moins quatre corps de roulement (24a, 24b, 25, 26) font partie d'un troisième groupe de corps de roulement, dans laquelle le premier, le deuxième et le troisième groupe de corps de roulement présentent chacun plusieurs corps de roulement (24a, 24b, 25, 26), lesquels sont disposés dans le même plan de déplacement (A, B, C).

9. Glissière d'extraction de tiroir selon l'une des revendications 1 à 8, **caractérisée en ce que** la glissière d'extraction de tiroir (4) présente un troisième rail de guidage (11) à fixer sur un tiroir (3), dans laquelle le premier rail de guidage (9) est à fixer à un corps de meuble (2), et dans laquelle le deuxième rail de guidage (10) est logé de façon déplaçable entre le premier rail de guidage (9) et le troisième rail de guidage (11).

10. Glissière d'extraction de tiroir selon l'une des revendications 1 à 9, **caractérisée en ce que** l'au moins un chariot (22) présente trois barrettes (35a, 35b, 35c) orientées essentiellement horizontalement dans la position de montage, à chacune desquelles est monté un des au moins quatre corps de roulement (24b, 25, 26), dans laquelle il est prévu, de préférence, que les corps de roulement (24b, 25, 26) sont montés à travers les barrettes (35a, 35b, 35c), dans laquelle il est prévu, de préférence, que les barrettes (35a, 35b, 35c) sont reliées ensemble par deux barrettes de liaison (36a, 36b) orientées essentiellement verticalement dans la position de montage, dans laquelle il est prévu, de préférence, qu'au moins l'une des barrettes de liaison (36a, 36b) présente au moins un rouleau d'appui latéral (31), lequel d'une manière particulièrement préférée est guidé à travers par cette barrette de liaison (36a, 36b).

11. Glissière d'extraction de tiroir selon la revendication 10, **caractérisée en ce que** l'une des barrettes (35a, 35b, 35c) orientées essentiellement horizontalement dans la position de montage s'étend essentiellement sur toute la largeur d'au moins un des rails de guidage (9, 10), dans laquelle il est prévu, de préférence, que cette barrette (35a) occupe une position plus basse par rapport aux deux autres barrettes (35b, 35c).

12. Glissière d'extraction de tiroir selon la revendication 10 ou 11, **caractérisée en ce que** l'une des barrettes (35a, 35b, 35c) orientées essentiellement horizontalement dans la position de montage est essentiellement deux fois aussi large qu'au moins l'une des deux autres barrettes (35b, 35c).

13. Glissière d'extraction de tiroir selon l'une des revendications 1 à 12, **caractérisée en ce que** l'au moins un chariot (22) est conçu en section transversale essentiellement en forme de U ou essentiellement en forme de C.

14. Glissière d'extraction de tiroir selon l'une des revendications 1 à 13, **caractérisée en ce que** l'au moins un chariot (22) présente une longueur (37), et la zone (38) dans laquelle sont disposés les corps de roulement (24a, 24b, 25, 26) du chariot (22) s'étend uniquement sur une partie de la longueur (37) de l'au moins un chariot (22).

15. Tiroir (3) avec au moins une glissière d'extraction de tiroir (4) selon l'une des revendications 1 à 14 destinée à déplacer un tiroir (3) par rapport à un corps de meuble (2).
